# EUROPEAN PATENT SPECIFICATION

(11) **EP 0 652 712 B1**
(45) Date of publication and mention of the grant of the patent: **11.07.2001**
(21) Application number: 93907161.9
(22) Date of filing: 02.03.1993
(51) Int. Cl.: A23G 3/30

(54) **IMPROVED WAX-FREE LOW MOISTURE CHEWING GUM**
VERBESSERTER WACHSFREIER FEUCHTIGKEITSARMER KAUGUMMI
CHEWING-GUM AMELIORE A FAIBLE TENEUR EN HUMIDITE ET DEPOURVU DE CIRE

(30) Priority: 03.03.1992 WO PCT/US92/01686; 30.06.1992 US 906921; 06.11.1992 WO PCT/US92/09615; 29.12.1992 US 996914; 29.12.1992 US 997876; 30.12.1992 US 997732; 30.12.1992 WO PCT/US92/11317
(43) Date of publication of application: 17.05.1995
(73) Proprietor: WM. WRIGLEY JR. COMPANY, Chicago Illinois 60611 (US)
(72) Inventor: SYNOSKY, Steven P., Greenbrook, NJ 08812 (US); MCGREW, Gordon N., Evanston, IL 60201 (US); SCHNELL, Philip G., Downers Grove, IL 60515 (US)
(74) Representative: Baverstock, Michael George Douglas
(86) International application number: US9301900
(87) International publication number: WO9317573

(56) References cited:
- WO-A-87/02223
- GB-A- 2 241 957
- US-A- 3 857 965
- US-A- 3 984 574
- US-A- 4 604 287
- US-A- 5 023 093
- US-A- 5 039 530

## Description

The present invention relates to improved low moisture chewing gums of the type which do not contain petroleum wax or mineral wax.

U.S. Patent No. 3,984,574, issued to Comollo, discloses an abhesive chewing gum base in which the non-tack properties were achieved by eliminating conventional chewing gum base ingredients which were found to contribute to chewing gum tackiness, and by substituting non-tacky ingredients in place of the conventional ingredients. Specifically, it was discovered that three classes of materials account for conventional chewing gum tackiness. These materials are elastomers, resins, and waxes.

Comollo eliminated natural and some synthetic elastomers from chewing gum base, and substituted in their place one or more non-tacky synthetic elastomers such as polyisobutylene, polyisoprene, isobutylene-isoprene copolymer and butadiene-styrene copolymer. Comollo also eliminated the tack-producing natural resins and modified natural resins and used instead relatively high amounts of hydrogenated or partially hydrogenated vegetable oils or animal fats. Finally, Comollo completely excluded waxes from the gum base, but included polyvinyl acetate, fatty acids, and mono and diglycerides of fatty acids.

US patent 5023093 issued to Cherukuri and Mansukhani discloses a low calorie chewing gum base containing polyvinyl acetate wherein the gum base comprises 40% to 90% of the chewing gum.

The present invention is directed to wax-free, low moisture chewing gum manufactured using wax-free gum bases and other essentially dried ingredients wherein the total amount of moisture contained in the final chewing gum product ranges from 0.1 weight percent to 2.0 weight percent water. The term "essentially dried" as used herein means less than 10 weight percent water and is used to describe ingredients which are anhydrous as well as ingredients containing as much as 10.0 weight percent water. These essentially dried, i.e. from 0 to 10% water, materials may be, for example dextrose or sucrose solid crystalline compounds or corn syrup solids, other types of sweeteners or sweetener solids, or such formulated products such as coevaporated Lycasin TM. Generally speaking, our wax-free low moisture gums are made using a wax-free gum base, bulking agents, binders and sweeteners (all herein referred to generally as sweeteners) where the bulking agents are the usual crystalline or powered sugars, sugar alcohols, and the like, and the binders are low moisture modified syrups such as those described in U.S. Patent No. 4,728,515 Patel et al, and U.S. Patent No. 4,671,861, Patel et al..

The modified low moisture syrups can be made by adding water-soluble plasticizers, i.e., glycerin, propylene glycol, or mixtures thereof, to carbohydrate syrups, which syrups preferably contain carbohydrate solids and water with less than 30 weight percent of the carbohydrate solids having a degree of polymerization (DP) of one, and more than 20 weight percent carbohydrate solids having a DP greater than 4. Normally the syrups initially contain at least 50 weight percent total carbohydrate solids.

After the addition of the water-soluble plasticizers to the carbohydrate syrups, the mixture is heated to temperatures sufficient to remove water from the mixture, preferably such that the total amount of water remaining in the plasticized carbohydrate syrup is less than 20 weight percent, and preferably less than 10 weight percent, of the total plasticized carbohydrate syrup.

The gum base of the invention includes quantities of at least one each of an elastomer, elastomer plasticizer, filler and softener, and, like the gum base of Comollo, is substantially free of petroleum, mineral, and, in most cases, natural waxes. However, the gum base of the invention is not limited to use in a non-tack chewing gum and may, therefore, contain, if selected, quantities of natural elastomer and/or natural resins, certain plasticizers, emulsifying agents and softeners. The gum base of the invention may also contain optional quantities of minor ingredients such as color, hygroscopic agents and antioxidant.

The use of natural elastomers in the gum base compliments certain chewing gum flavors, such as mint oil, by rounding out the otherwise harsh or grassy notes in the flavor. The presence of natural elastomers and natural resins in the gum base also contributes to improved chewing gum texture and flavor retention. There is currently a need or desire in the chewing gum industry for gum bases which are devoid or substantially free of hydrocarbon-containing waxes and which contain desired quantities of natural elastomers, natural resins, or both.

We have found that, by removing petroleum and mineral wax from the normal chewing gums having moisture contents in excess of 2.5 to 3.0 weight percent, sometimes as high as from 3.0 to 8.0 weight percent or higher, that these high moisture wax-free gums tend to dry out and become brittle with time. The storage stability of such a wax-free gum in something less than desirable when the wax-free gum contains at least 2.5 weight percent water (moisture), particularly from 3.0 to 8.0 weight percent water, or higher. The chewing gums, with this poor stability, lose flexibility, become hard, and are brittle.

With the foregoing in mind, it is a feature and advantage of the invention to provide a substantially wax-free low moisture chewing gum having improved storage stability.

It is also a feature and advantage of the invention to provide a suitably soft chewing gum with low moisture in which wax is not needed to soften the chewing gum.

It is also a feature and advantage of the invention to provide in one embodiment improved chewing gums which contain wax-free chewing gum ingredients having low moisture content, which gums retain flexibility and provide a good soft initial chew.

It is a feature and advantage of one embodiment of the invention to provide improved wax-free, low moisture chewing gums that hydrate better during from one to three minutes of chewing.

It is a feature and advantage of one embodiment of the invention to provide wax-free, low moisture chewing gum products having desirable properties such as flavor quality and strength, flavor and sweetness retention, breath freshening, dental and oral health properties and good shelf stability.

The foregoing and other features and advantages will become further apparent from the following detailed description of the presently preferred embodiments, when read in conjunction with the accompanying examples. It should be understood that the detailed description and examples are illustrative rather than limitative, the scope of the present invention being defined by the appended claims.

In accordance with the present invention there is provided a wax-free low moisture chewing gum containing from 0.10 wt% to 2 wt% water and comprising from 10 to 90 wt% of a wax-free gum base comprising:
from 10 to 60 wt% of at least one synthetic elastomer;
at least one natural elastomer in an amount of 30wt% or less;
from 5 to 55 wt% of at least one elastomer plasticizer;
from 4 to 40 wt% filler; and
from 5 to 40 wt% of at least one fat oil or softener; said chewing gum further comprising from 0.001 to 70 wt% sweetener, and from 0.01 to 10 wt% flavouring agent.

Synthetic elastomers may include, but are not limited to, polyisobutylene (PIB) with GPC molecular weight of from 10,000 to 95,000, isobutylene-isoprene copolymer (butyl rubber, or butyl elastomer), styrene-butadiene copolymers having styrene-butadiene ratios of from 1:3 to 3:1 (SBR), polyvinyl acetate (PVA) having GPC molecular weight of about 2,000 to about 90,000, polyisoprene (PIP), polyethylene (PE), vinyl acetate-vinyl laurate copolymer having vinyl laurate content of from 5 to 50 percent by weight of the copolymer, and combinations thereof.

Preferred ranges are, for polyisobutylene, 50,000 to 80,000 GPC molecular weight, for styrene-butadiene, 1:1 to 1:3 bound styrene-butadiene, for polyvinyl acetate, 10,000 to 65,000 GPC molecular weight with the higher molecular weight polyvinyl acetates typically used in bubble gum base, and for vinyl acetate-vinyl laurate, vinyl laurate content of 10 to 45 percent.

Natural elastomers may include natural rubber such as smoked or liquid latex and guayule as well as natural gums such as jelutong, lechi caspi, perillo, sorva, massaranduba balata, massaranduba chocolate, nispero, rosindinha, chicle, gutta hang kang, chiquibul, crown gum, pendare, venezuelau chicle, leche de vaca, niger gutta, tunu, chilte and combinations thereof. The preferred natural elastomers are jelutong, chicle, sorva and massaranduba balata. The preferred elastomers and elastomer concentrations vary depending on whether the chewing gum in which the base is used is abhesive or conventional, bubble gum or regular gum, as discussed below.

Elastomer plasticizers may include, but are not limited to, natural rosin esters such as glycerol esters of partially hydrogenated rosin, glycerol esters of polymerized rosin, glycerol esters of partially dimerized rosin, glycerol esters of rosin, glycerol ester of tall oil rosin, pentaerythritol esters of partially hydrogenated rosin, methyl and partially hydrogenated methyl esters of rosin, pentaerythritol esters of rosin; synthetics such as terpene resins derived from alpha-pinene, beta-pinene, and/or d-limonene; natural terpene resin; and any suitable combinations of the foregoing. The preferred elastomer plasticizers will also vary depending on the specific application, and on the type of elastomer which is used. For example, use of terpene resin to wholly or partially replace ester gums will cause the gum base to be less tacky.

The term "wax-free" as used herein refers to the exclusion of waxes which contain mineral hydrocarbons. Natural waxes such as carnauba wax, beeswax, rice bran wax, and candellila wax do not contain mineral hydrocarbons and are therefor acceptable for use in the chewing gum base and chewing gums prepared therefrom. However, even the natural waxes are optional ingredients, and are used within the range of from 0.0 to 5.0 weight percent of the gum base.

Fillers/texturizers may include magnesium and calcium carbonate, ground limestone, silicate types such as magnesium and aluminum silicate, clay, alumina, talc, titanium oxide, mono-, di- and tri-calcium phosphate, cellulose polymers, such as wood, and combinations thereof.

Fats, oils, and softeners/emulsifiers may include tallow, hydrogenated tallow, hydrogenated and partially hydrogenated vegetable oils, cocoa butter, glycerol monostearate, glycerol triacetate (triacetin), lecithin, mono-, di- and triglycerides, acetylated monoglycerides, fatty acids (e.g. stearic, palmitic, oleic and linoleic acids), lanolin, diacetin, and combinations thereof. Hydrogenated vegetable oils are generally preferred, either alone or in combination with other softeners. Glycerol triacetate (also named triacetin) may also be preferred in combination with selected fats and oils, particularly the hydrogenated or partially hydrogenated vegetable oils. Particularly preferred softeners are hydrogenated or partially hydrogenated vegetable oils, glycerol monostearate, glycerol triacetate (triacetin) lecithin, and mixtures thereof.

Colorants and whiteners may include FD&C-type dyes and lakes, fruit and vegetable extracts, titanium dioxide, cocoa powder and combinations thereof.

The wax-free gum base of the invention may also contain optional ingredients such as antioxidants.

When the wax-free gum base of the invention is to be used in a regular (non-bubble) gum which has at least some abhesive (reduced tack) characteristics, the base should contain from 10 to 40 weight percent of at least one synthetic elastomer, from 15 to 30 weight percent of at least one elastomer plasticizer, from 5 to 30 weight percent filler, from 15 to 35 weight percent of at least one fat, oil, or, softener, from 0 to 1 weight percent colorant and from 0 to 0.1 weight percent antioxidant. Specific embodiments of the wax-free gum base are provided in Examples 1 to 30 below.

**Table 1:**

| Wax-Free Gum Base For Use In Chewing Gum Having Some Reduced Tack Characteristics (Examples 1-30) | | | | | |
|---|---|---|---|---|---|
| **EXAMPLES 1-5** | | | | | |
| IDENTIFICATION - EXAMPLE #: GENERIC INGREDIENTS | 1 | 2 | 3 | 4 | 5 |
| ^{**} **SYNTHETIC ELASTOMER** ^{**} | | | | | |
| STYRENE-BUTADIENE ELASTOMER | 5.3 | --- | 2.1 | 1.3 | 1.8 |
| BUTYL (ISOPRENE-ISOBUTYLENE) ELASTOMER | 8.6 | 7.9 | 7.2 | 14.8 | --- |
| POLYISOBUTYLENE ELASTOMER | 7.1 | --- | 7.4 | 5.2 | 24.8 |
| POLYVINYL ACETATE | 10.5 | 27.2 | 15.3 | 12.1 | 10.1 |

| ^{**} **ELASTOMER PLASTICIZERS** ^{**} | | | | | |
|---|---|---|---|---|---|
| GLYCEROL ESTERS OF ROSIN | 2.1 | --- | 19.0 | --- | 3.7 |
| GLYCEROL ESTERS OF PART HYD ROSIN | 4.3 | 18.2 | --- | 15.3 | 7.9 |
| TERPENE RESINS | 10.8 | --- | --- | --- | 7.1 |

| ^{******} **FILLER** ^{******} | | | | | |
|---|---|---|---|---|---|
| CALCIUM CARBONATE | --- | 15.9 | 20.7 | --- | 17.7 |
| TALC | 25.5 | --- | --- | 16.7 | --- |

| ^{******} **SOFTENER** ^{******} | | | | | |
|---|---|---|---|---|---|
| HYDROGENATED VEGETABLE OIL | 15.3 | 22.6 | 24.3 | 28.4 | 21.0 |
| GLYCEROL MONOSTEARATE | 8.2 | 7.4 | 4.0 | 5.1 | 3.5 |
| LECITHIN | 2.3 | 0.8 | --- | 1.1 | 2.4 |
| **TOTAL PERCENT** | 100.0 | 100.0 | 100.0 | 100.0 | 100.0 |

| EXAMPLES 6-10 | | | | | |
|---|---|---|---|---|---|
| IDENTIFICATION - EXAMPLE #: GENERIC INGREDIENTS | 6 | 7 | 8 | 9 | 10 |
| ^{**} **SYNTHETIC ELASTOMER** ^{**} | | | | | |
| STYRENE-BUTADIENE ELASTOMER | --- | --- | -- | 5.2 | 2.1 |
| BUTYL (ISOPRENE-ISOBUTYLENE) ELASTOMER | 8.1 | 14.6 | 9.4 | 4.1 | 7.2 |
| POLYISOBUTYLENE ELASTOMER | 3.6 | 1.2 | 13.0 | 5.9 | 7.3 |
| POLYVINYL ACETATE | 27.5 | 26.2 | 22.3 | 25.7 | 15.3 |

| ^{**} **ELASTOMER PLASTICIZERS** ^{**} | | | | | |
|---|---|---|---|---|---|
| GLYCEROL ESTERS OF ROSIN | --- | 4.9 | --- | 23.5 | 19.1 |
| GLYCEROL ESTERS OF PART HYD ROSIN | --- | 12.6 | --- | --- | -- |
| TERPENE RESINS | 27.1 | --- | 10.0 | 3.2 | --- |

| ^{**} **FILLER** ^{**} | | | | | |
|---|---|---|---|---|---|
| CALCIUM CARBONATE | 10.9 | --- | 20.0 | 15.1 | 20.7 |
| TALC | --- | 13.1 | --- | --- | --- |

| ^{**} **SOFTENER** ^{**} | | | | | |
|---|---|---|---|---|---|
| HYDROGENATED VEGETABLE OIL | 14.3 | 16.6 | 20.7 | 12.2 | 24.3 |
| GLYCEROL MONOSTEARATE | 4.8 | 9.6 | 4.6 | 5.1 | 4.0 |
| LECITHIN | 3.7 | 1.2 | --- | --- | --- |
| **TOTAL PERCENT** | 100.0 | 100.0 | 100.0 | 100.00 | 100.0 |

| EXAMPLES 11-15 | | | | | |
|---|---|---|---|---|---|
| IDENTIFICATION - EXAMPLE #: GENERIC INGREDIENTS | 11 | 12 | 13 | 14 | 15 |
| ^{**} **SYNTHETIC ELASTOMER** ^{**} | | | | | |
| STYRENE-BUTADIENE ELASTOMER | 4.3 | 5.9 | 3.9 | --- | 2.1 |
| BUTYL (ISOPRENE-ISOBUTYLENE) ELASTOMER | 6.2 | 6.9 | 5.3 | 9.3 | 6.0 |
| POLYISOBUTYLENE ELASTOMER | 6.4 | 2.0 | 12.7 | 12.1 | 8.5 |
| POLYVINYL ACETATE | 21.8 | 24.8 | 14.9 | 21.4 | 15.3 |

| ^{**} **ELASTOMER PLASTICIZERS** ^{**} | | | | | |
|---|---|---|---|---|---|
| GLYCEROL ESTERS OF ROSIN | 2.6 | 8.6 | --- | --- | 10.1 |
| GLYCEROL ESTERS OF PART HYD ROSIN | --- | 8.0 | --- | --- | 8.9 |
| TERPENE RESINS | 17.1 | 1.9 | 21.4 | 6.5 | --- |

| ^{**} **FILLER** ^{**} | | | | | |
|---|---|---|---|---|---|
| CALCIUM CARBONATE | --- | 9.9 | 13.7 | 21.4 | 20.9 |
| TALC | 14.6 | 7.2 | 1.4 | --- | --- |

| ^{**} **SOFTENER** ^{**} | | | | | |
|---|---|---|---|---|---|
| HYDROGENATED VEGETABLE OIL | 19.5 | 21.1 | 18.7 | 25.2 | 24.2 |
| GLYCEROL MONOSTEARATE | 4.4 | 3.7 | 5.7 | 4.1 | 4.0 |
| LECITHIN | 3.1 | --- | 2.3 | --- | --- |
| **TOTAL PERCENT** | 100.0 | 100.0 | 100.0 | 100.0 | 100.0 |

| EXAMPLES 16-20 | | | | | |
|---|---|---|---|---|---|
| IDENTIFICATION - EXAMPLE #: GENERIC INGREDIENTS | 16 | 17 | 18 | 19 | 20 |
| ^{******} **SYNTHETIC ELASTOMER** ^{******} | | | | | |
| STYRENE-BUTADIENE ELASTOMER | 1.6 | --- | 2.7 | --- | --- |
| BUTYL (ISOPRENE-ISOBUTYLENE) ELASTOMER | 3.7 | 8.1 | 2.3 | 8.9 | 3.6 |
| POLYISOBUTYLENE ELASTOMER | 6.8 | 3.6 | 14.2 | 10.0 | 11.1 |
| POLYVINYL ACETATE | 22.3 | 27.3 | 17.3 | 21.3 | 21.9 |

| ^{**} **ELASTOMER PLASTICIZERS** ^{**} | | | | | |
|---|---|---|---|---|---|
| GLYCEROL ESTERS OF ROSIN | 9.9 | --- | --- | --- | 19.6 |
| GLYCEROL ESTERS OF PART HYD ROSIN | 4.3 | --- | 27.3 | --- | 11.2 |
| TERPENE RESINS | 11.6 | 26.9 | --- | 9.7 | 3.7 |

| ^{**} **FILLER** ^{**} | | | | | |
|---|---|---|---|---|---|
| CALCIUM CARBONATE | --- | 11.3 | --- | 21.5 | 6.4 |
| TALC | 17.2 | --- | 8.2 | --- | --- |

| ^{**} **SOFTENER** ^{**} | | | | | |
|---|---|---|---|---|---|
| HYDROGENATED VEGETABLE OIL | 17.8 | 14.3 | 22.4 | 23.2 | 19.2 |
| GLYCEROL MONOSTEARATE | 4.8 | 4.8 | 2.7 | 5.4 | 3.3 |
| LECITHIN | --- | 3.7 | 2.9 | --- | --- |
| **TOTAL PERCENT** | 100.0 | 100.0 | 100.0 | 100.0 | 100.0 |

| EXAMPLES 21-25 | | | | | |
|---|---|---|---|---|---|
| IDENTIFICATION - EXAMPLE #: GENERIC INGREDIENTS | 21 | 22 | 23 | 24 | 25 |
| ^{******} **SYNTHETIC ELASTOMER** ^{******} | | | | | |
| STYRENE-BUTADIENE ELASTOMER | --- | 1.4 | 3.2 | --- | 4.1 |
| BUTYL (ISOPRENE-ISOBUTYLENE) ELASTOMER | 7.4 | 8.4 | 7.3 | 8.8 | 11.3 |
| POLYISOBUTYLENE ELASTOMER | 1.9 | 1.6 | 7.5 | 3.5 | 7.9 |
| POLYVINYL ACETATE | 24.8 | 23.1 | 21.1 | 27.9 | 18.2 |

| ^{**} **ELASTOMER PLASTICIZERS** ^{**} | | | | | |
|---|---|---|---|---|---|
| GLYCEROL ESTERS OF ROSIN | --- | 13.1 | 15.3 | --- | --- |
| GLYCEROL ESTERS OF PART HYD ROSIN | --- | 22.1 | 2.4 | --- | 26.2 |
| TERPENE RESINS | 25.8 | 3.6 | 5.8 | 27.4 | 1.4 |

| ^{**} **FILLER** ^{**} | | | | | |
|---|---|---|---|---|---|
| CALCIUM CARBONATE | 18.6 | --- | --- | 11.9 | 13.6 |
| TALC | --- | 7.3 | 14.8 | --- | --- |

| **** SOFTENER** ^{******} | | | | | |
|---|---|---|---|---|---|
| HYDROGENATED VEGETABLE OIL | 12.3 | 11.3 | 19.8 | 12.3 | 8.2 |
| GLYCEROL MONOSTEARATE | 4.4 | 4.4 | 2.8 | 4.7 | 5.2 |
| LECITHIN | 4.8 | 3.7 | --- | 3.5 | 3.9 |
| **TOTAL PERCENT** | 100.0 | 100.0 | 100.0 | 100.0 | 100.0 |

| EXAMPLES 26-30 | | | | | |
|---|---|---|---|---|---|
| IDENTIFICATION - EXAMPLE #: GENERIC INGREDIENTS | 26 | 27 | 28 | 29 | 30 |
| ^{**} **SYNTHETIC ELASTOMER **** | | | | | |
| STYRENE-BUTADIENE ELASTOMER | --- | --- | --- | --- | --- |
| BUTYL (ISOPRENE-ISOBUTYLENE) ELASTOMER | 10.0 | 9.2 | 2.4 | 8.3 | 8.8 |
| POLYISOBUTYLENE ELASTOMER | 1.9 | 6.3 | 8.4 | 3.6 | 2.3 |
| POLYVINYL ACETATE | 27.6 | 13.1 | 20.5 | 27.5 | 27.4 |

| ^{**} **ELASTOMER PLASTICIZERS** ^{**} | | | | | |
|---|---|---|---|---|---|
| GLYCEROL ESTERS OF ROSIN | --- | --- | --- | --- | --- |
| GLYCEROL ESTERS OF PART HYD ROSIN | --- | 19.9 | --- | --- | -- |
| TERPENE RESINS | 25.3 | --- | 23.5 | 25.3 | 28.3 |

| ^{**} **FILLER** ^{**} | | | | | |
|---|---|---|---|---|---|
| CALCIUM CARBONATE | 11.3 | 22.3 | --- | 11.3 | 12.5 |
| TALC | --- | --- | 15.6 | --- | --- |

| ^{******} **SOFTENER** ^{******} | | | | | |
|---|---|---|---|---|---|
| HYDROGENATED VEGETABLE OIL | 15.4 | 18.6 | 19.2 | 16.5 | 12.5 |
| GLYCEROL MONOSTEARATE | 4.8 | 10.6 | 8.9 | 4.8 | 4.7 |
| LECITHIN | 3.7 | --- | 1.5 | 2.7 | 3.5 |
| **TOTAL PERCENT** | 100.0 | 100.0 | 100.0 | 100.0 | 100.0 |

When the wax-free gum base of the invention is to be used in a regular (non-bubble) gum which does not have abhesive characteristics, the base should contain from 12 to 30 weight percent natural elastomer, from 20 to 40 weight percent synthetic elastomer, from 4 to 25 weight percent elastomer plasticizer, from 5 to 25 weight percent filler, from 15 to 30 weight percent fats, oils, and softeners, from 0 to 1 weight percent colorant and from 0 to 0.1 weight percent antioxidant. Specific embodiments of the wax-free gum base fitting this description are provided in Examples 31 to 55 below:

**Table 2:**

| Wax-Free Gum Bases For Use In Chewing Gum Not Having Reduced Tack (Examples 31-55) | | | | | |
|---|---|---|---|---|---|
| EXAMPLES 31-34 | | | | | |
| IDENTIFICATION - EXAMPLE #:GENERIC INGREDIENTS | 31 | 32 | 33 | 34 | |
| ^{******} **NATURAL ELASTOMER **** | | | | | |
| NATURAL GUM | 22.0 | 26.5 | 23.4 | 25.1 | |

| ^{******} **SYNTHETIC ELASTOMER** ^{******} | | | | | |
|---|---|---|---|---|---|
| STYRENE-BUTADIENE ELASTOMER | | | - | 1.9 | |
| BUTYL (ISOPRENE-ISOBUTYLENE) ELASTOMER | 4.8 | 7.1 | 5.6 | 2.1 | |
| POLYISOBUTYLENE ELASTOMER | 5.7 | 5.6 | 3.0 | 4.7 | |
| POLYVINYL ACETATE | 16.4 | 18.7 | 19.8 | 24.8 | |

| ^{**} **ELASTOMER PLASTICIZERS** ^{**} | | | | | |
|---|---|---|---|---|---|
| GLYCEROL ESTERS OF ROSIN | 3.8 | - | - | 3.2 | |
| GLYCEROL ESTERS OF PART HYD ROSIN | 12.3 | 15.3 | 15.9 | 12.6 | |
| METHYL ESTERS OF ROSIN | - | - | - | 2.1 | |
| TERPENE RESINS | - | - | - | - | |

| **** FILLER **** | | | | | |
|---|---|---|---|---|---|
| CALCIUM CARBONATE | - | 4.0 | 10.7 | 4.4 | |
| TALC | 7.1 | - | - | - | |

| ^{**} **SOFTENER** ^{**} | | | | | |
|---|---|---|---|---|---|
| HYDROGENATED VEGETABLE OIL | 21.8 | 18.4 | 16.8 | 12.6 | |
| GLYCEROL MONOSTEARATE | 6.1 | 4.4 | 4.8 | 3.8 | |
| LECITHIN | - | - | - | 2.7 | |
| **TOTAL PERCENT** | 100.0 | 100.0 | 100.0 | 100.0 | |

| EXAMPLES 35-38 | | | | | |
|---|---|---|---|---|---|
| IDENTIFICATION - EXAMPLE #: GENERIC INGREDIENTS | 35 | 36 | 37 | 38 | |
| ^{**} **NATURAL ELASTOMER** ^{**} | | | | | |
| NATIONAL GUM | 22.8 | 18.2 | 23.5 | 17.6 | |

| **** SYNTHETIC ELASTOMER **** | | | | | |
|---|---|---|---|---|---|
| STYRENE-BUTADIENE ELASTOMER | 2.6 | --- | | | |
| BUTYL (ISOPRENE-ISOBUTYLENE) ELASTOMER | 4.1 | 6.9 | 8.8 | 10.2 | |
| POLYISOBUTYLENE ELASTOMER | 3.2 | 5.4 | 3.3 | 2.1 | |
| POLYVINYL ACETATE | 16.3 | 15.2 | 12.9 | 26.9 | |

| ^{*****}^{*} **ELASTOMER PLASTICIZERS** ^{******} | | | | | |
|---|---|---|---|---|---|
| GLYCEROL ESTERS OF ROSIN | 6.9 | - | 8.5 | 11.7 | |
| GLYCEROL ESTERS OF PART HYD ROSIN | 11.8 | 12.5 | 5.5 | 4.8 | |
| METHYL ESTERS OF ROSIN | 1.7 | 2.6 | 1.4 | - | |
| TERPENE RESINS | - | - | 3.7 | - | |

| ^{**} **FILLER** ^{**} | | | | | |
|---|---|---|---|---|---|
| CALCIUM CARBONATE | 9.3 | 16.0 | --- | --- | |
| TALC | --- | --- | 9.3 | 4.6 | |

| ^{******} **SOFTENER** ^{**} | | | | | |
|---|---|---|---|---|---|
| HYDROGENATED VEGETABLE OIL | 18.2 | 16.1 | 16.2 | 15.8 | |
| GLYCEROL MONOSTEARATE | --- | 7.1 | 5.7 | 6.3 | |
| LECITHIN | 3.1 | --- | 1.2 | -- | |
| **TOTAL PERCENT** | 100.0 | 100.0 | 100.0 | 100.0 | |

| EXAMPLES 39-42 | | | | | |
|---|---|---|---|---|---|
| IDENTIFICATION - EXAMPLE #: GENERIC INGREDIENTS | 39 | 40 | 41 | 42 | |
| ^{**} **NATURAL ELASTOMER** ^{**} | | | | | |
| NATURAL GUM | 12.9 | 18.5 | 15.7 | 22.6 | |

| ^{**} **SYNTHETIC ELASTOMER** ^{**} | | | | | |
|---|---|---|---|---|---|
| STYRENE-BUTADIENE ELASTOMER | --- | --- | 1.9 | --- | |
| BUTYL (ISOPRENE-ISOBUTYLENE) ELASTOMER | 9.1 | 6.4 | 3.7 | 5.8 | |
| POLYISOBUTYLENE ELASTOMER | 9.4 | 5.2 | 4.1 | 3.1 | |
| POLYVINYL ACETATE | 10.7 | 15.4 | 26.2 | 20.4 | |

| ^{**} **ELASTOMER PLASTICIZERS** ^{**} | | | | | |
|---|---|---|---|---|---|
| GLYCEROL ESTERS OF ROSIN | 15.2 | - | - | - | |
| GLYCEROL ESTERS OF PART HYD ROSIN | - | 13.2 | 15.3 | 11.7 | |
| METHYL ESTERS OF ROSIN | - | 2.0 | - | 4.0 | |
| TERPENE RESINS | - | - | - | - | |

| ^{******} **FILLER** ^{**} | | | | | |
|---|---|---|---|---|---|
| CALCIUM CARBONATE | 20.6 | 18.5 | 12.2 | 11.6 | |
| TALC | - | - | - | - | |

| ^{******} **SOFTENER** ^{******} | | | | | |
|---|---|---|---|---|---|
| HYDROGENATED VEGETABLE OIL | 15.8 | 13.9 | 15.1 | 17.5 | |
| GLYCEROL MONOSTEARATE | 6.3 | 6.9 | 5.8 | 3.3 | |
| LECITHIN | - | - | - | - | |
| **TOTAL PERCENT** | 100.0 | 100.0 | 100.0 | 100.0 | |

| EXAMPLES 43-46 | | | | | |
|---|---|---|---|---|---|
| IDENTIFICATION - EXAMPLE #: GENERIC INGREDIENTS | 43 | 44 | 45 | 46 | |
| ^{******} **NATURAL ELASTOMER** ^{******} | | | | | |
| NATURAL GUM | 23.7 | 22.1 | 21.1 | 22.2 | |

| ^{******} **SYNTHETIC ELASTOMER** ^{******} | | | | | |
|---|---|---|---|---|---|
| STYRENE-BUTADIENE ELASTOMER | - | - | - | - | |
| BUTYL (ISOPRENE-ISOBUTYLENE) ELASTOMER | 6.2 | 5.7 | 6.1 | 5.7 | |
| POLYISOBUTYLENE ELASTOMER | 5.9 | 3.1 | 2.8 | 3.1 | |
| POLYVINYL ACETATE | 23.7 | 22.0 | 18.0 | 22.0 | |

| ^{******} **ELASTOMER PLASTICIZERS **** | | | | | |
|---|---|---|---|---|---|
| GLYCEROL ESTERS OF ROSIN | - | - | 15.7 | - | |
| GLYCEROL ESTERS OF PART HYD ROSIN | 11.3 | 15.2 | - | 13.2 | |
| METHYL ESTERS OF ROSIN | 2.9 | - | - | 2.0 | |
| TERPENE RESINS | 2.8 | - | - | - | |

| ^{******} **FILLER **** | | | | | |
|---|---|---|---|---|---|
| CALCIUM CARBONATE | 5.6 | 11.4 | - | 11.3 | |
| TALC | - | - | 15.4 | - | |

| ^{******} **SOFTENER** ^{******} | | | | | |
|---|---|---|---|---|---|
| HYDROGENATED VEGETABLE OIL | 12.1 | 17.2 | 15.1 | 17.2 | |
| GLYCEROL MONOSTEARATE | 5.8 | 3.3 | 5.8 | 3.3 | |
| LECITHIN | - | - | - | - | |
| **TOTAL PERCENT** | 100.0 | 100.0 | 100.0 | 100.0 | |

| EXAMPLES 47-50 | | | | | |
|---|---|---|---|---|---|
| IDENTIFICATION - EXAMPLE #: GENERIC INGREDIENTS | 47 | 48 | 49 | 50 | |
| ^{**} **NATURAL ELASTOMER** ^{**} | | | | | |
| NATURAL GUM | 23.8 | 28.4 | 18.7 | 19.5 | |

| ^{**} **SYNTHETIC ELASTOMER** ^{**} | | | | | |
|---|---|---|---|---|---|
| STYRENE-BUTADIENE ELASTOMER | - | - | - | | |
| BUTYL (ISOPRENE-ISOBUTYLENE) ELASTOMER | 3.1 | 5.4 | 6.9 | 8.2 | |
| POLYISOBUTYLENE ELASTOMER | 7.7 | 3.1 | 5.5 | 2.7 | |
| POLYVINYL ACETATE | 20.5 | 26.6 | 14.8 | 17.2 | |

| ^{**} **ELASTOMER PLASTICIZERS** ^{**} | | | | | |
|---|---|---|---|---|---|
| GLYCEROL ESTERS OF ROSIN | - | - | - | 20.0 | |
| GLYCEROL ESTERS OF PART HYD ROSIN | 10.4 | 11.4 | 15.5 | - | |
| METHYL ESTERS OF ROSIN | 2.0 | - | - | - | |
| TERPENE RESINS | 5.1 | - | - | - | |

| ^{**} **FILLER** ^{**} | | | | | |
|---|---|---|---|---|---|
| CALCIUM CARBONATE | - | 9.1 | 17.9 | 9.6 | |
| TALC | 5.3 | - | - | - | |

| **** SOFTENER **** | | | | | |
|---|---|---|---|---|---|
| HYDROGENATED VEGETABLE OIL | 15.8 | 16.0 | 13.0 | 22.8 | |
| GLYCEROL MONOSTEARATE | 6.3 | - | 7.7 | - | |
| LECITHIN | --- | --- | --- | --- | |
| **TOTAL PERCENT** | 100.0 | 100.0 | 100.0 | 100.0 | |

| EXAMPLES 51-55 | | | | | |
|---|---|---|---|---|---|
| IDENTIFICATION - EXAMPLE #: GENERIC INGREDIENTS | 51 | 52 | 53 | 54 | 55 |
| ^{**} **NATURAL ELASTOMER** ^{**} | | | | | |
| NATURAL GUM | 14.4 | 18.2 | 25.2 | 25.2 | 26.7 |

| ^{**} **SYNTHETIC ELASTOMER** ^{******} | | | | | |
|---|---|---|---|---|---|
| STYRENE-BUTADIENE ELASTOMER | --- | --- | - | - | - |
| BUTYL (ISOPRENE-ISOBUTYLENE) ELASTOMER | 9.1 | 6.8 | 2.4 | 3.5 | 3.2 |
| POLYISOBUTYLENE ELASTOMER | 3.6 | 5.4 | 4.9 | 5.7 | 6.1 |
| POLYVINYL ACETATE | 18.1 | 15.5 | 19.9 | 19.1 | 17.6 |

| ^{**} **ELASTOMER PLASTICIZERS** ^{**} | | | | | |
|---|---|---|---|---|---|
| GLYCEROL ESTERS OF ROSIN | 11.9 | - | 15.6 | - | - |
| GLYCEROL ESTERS OF PART HYD ROSIN | 13.0 | 12.7 | --- | 15.6 | 15.6 |
| METHYL ESTERS OF ROSIN | --- | 2.6 | - | - | - |
| TERPENE RESINS | - | - | 2.1 | 1.9 | - |

| **** FILLER** ^{******} | | | | | |
|---|---|---|---|---|---|
| CALCIUM CARBONATE | 14.1 | 15.7 | - | - | - |
| TALC | - | --- | 7.1 | 6.2 | 8.0 |

| ^{******} **SOFTENER** ^{******} | | | | | |
|---|---|---|---|---|---|
| HYDROGENATED VEGETABLE OIL | 15.8 | 16.0 | 18.4 | 18.4 | 18.4 |
| GLYCEROL MONOSTEARATE | - | 7.1 | 4.4 | 4.4 | 2.8 |
| LECITHIN | - | - | - | - | 1.6 |
| **TOTAL PERCENT** | 100.0 | 100.0 | 100.0 | 100.0 | 100.0 |

When the wax-free gum base of the invention is to be used in a bubble gum, the base should contain from 30 to 60 weight percent synthetic elastomer, from 5 to 55 weight percent elastomer plasticizer, from 10 to 35 weight percent filler, from 5 to 25 weight percent fats, oils, emulsifiers, and other softeners, from 0 to 1 weight percent colorant and from 0 to 0.1 weight percent antioxidant. Specific embodiments of the wax-free base for use in bubble gum are provided in Examples 56 to 74 below.

**Table 3:**

| **Wax-Free Gum** **Bases For Use In Bubble Gum** | | | | | |
|---|---|---|---|---|---|
| **EXAMPLES 56-60** | | | | | |
| IDENTIFICATION - EXAMPLE #: GENERIC INGREDIENTS | 56 | 57 | 58 | 59 | 60 |
| ^{******} **SYNTHETIC ELASTOMER**^{******} | | | | | |
| POLYISOBUTYLENE ELASTOMER | 17.1 | 16.7 | 11.7 | 6.2 | 11.6 |
| POLYVINYL ACETATE | 24.9 | 25.6 | 29.4 | 30.9 | 31.5 |

| ^{**} **ELASTOMER PLASTICIZERS** ^{**} | | | | | |
|---|---|---|---|---|---|
| GLYCEROL ESTERS OF ROSIN | 6.8 | 8.0 | 10.7 | 14.6 | 19.8 |
| GLYCEROL ESTERS OF PART HYD ROSIN | --- | --- | --- | --- | --- |

| ^{**} **FILLER** ^{**} | | | | | |
|---|---|---|---|---|---|
| CALCIUM CARBONATE | --- | --- | --- | --- | --- |
| TALC | 34.7 | 34.9 | 34.1 | 34.0 | 21.9 |

| ^{**} **SOFTENER** ^{**} | | | | | |
|---|---|---|---|---|---|
| GLYCEROL TRIACETATE (TRIACETIN) | 4.6 | 3.9 | 4.4 | 4.7 | 5.0 |
| GLYCEROL MONOSTEARATE | 5.8 | 5.7 | 4.3 | 4.6 | 4.9 |
| ACETYLATED MONOGLYCERIDE | 6.1 | 5.2 | 5.4 | 5.0 | 5.3 |
| **TOTAL PERCENT** | 100.0 | 100.0 | 100.0 | 100.0 | 100.0 |

| EXAMPLES 61-64 | | | | | |
|---|---|---|---|---|---|
| IDENTIFICATION - EXAMPLE #: GENERIC INGREDIENTS | 61 | 62 | 63 | 64 | |
| ^{**} **SYNTHETIC ELASTOMER** ^{**} | | | | | |
| POLYISOBUTYLENE ELASTOMER | 15.7 | 13.2 | 5.4 | 7.9 | |
| POLYVINYL ACETATE | 32.1 | 33.2 | 34.8 | 34.2 | |

| ^{**} **ELASTOMER PLASTICIZERS** ^{**} | | | | | |
|---|---|---|---|---|---|
| GLYCEROL ESTERS OF ROSIN | 27.4 | 22.6 | 16.3 | 14.8 | |
| GLYCEROL ESTERS OF PART HYD ROSIN | -- | --- | --- | --- | |

| ^{**} **FILLER** ^{**} | | | | | |
|---|---|---|---|---|---|
| CALCIUM CARBONATE | --- | -- | 30.2 | 29.8 | |
| TALC | 10.1 | 17.3 | --- | --- | |

| ^{******} **SOFTENER** ^{******} | | | | | |
|---|---|---|---|---|---|
| GLYCEROL TRIACETATE (TRIACETIN) | 4.9 | 5.0 | 5.3 | 5.3 | |
| GLYCEROL MONOSTEARATE | 4.7 | 4.1 | 5.9 | 5.0 | |
| ACETYLATED MONOGLYCERIDE | 5.1 | 4.6 | 2.1 | 3.0 | |
| **TOTAL PERCENT** | 100.0 | 100.0 | 100.0 | 100.0 | |

| EXAMPLES 65-69 | | | | | |
|---|---|---|---|---|---|
| IDENTIFICATION - EXAMPLE #: GENERIC INGREDIENTS | 65 | 66 | 67 | 68 | 69 |
| ^{**} **SYNTHETIC ELASTOMER** ^{**} | | | | | |
| POLYISOBUTYLENE ELASTOMER | 17.2 | 13.0 | 11.6 | 11.6 | 7.9 |
| POLYVINYL ACETATE | 37.3 | 37.1 | 39.9 | 41.2 | 34.2 |

| ^{**} **ELASTOMER PLASTICIZERS** ^{**} | | | | | |
|---|---|---|---|---|---|
| GLYCEROL ESTERS OF ROSIN | 11.2 | --- | --- | --- | --- |
| GLYCEROL ESTERS OF PART HYD ROSIN | --- | 19.8 | 19.9 | 19.4 | 14.8 |

| ^{**} **FILLER** ^{**} | | | | | |
|---|---|---|---|---|---|
| CALCIUM CARBONATE | 20.6 | 16.5 | 15.0 | --- | 29.8 |
| TALC | --- | --- | --- | 14.0 | --- |

| ^{**} **SOFTENER** ^{**} | | | | | |
|---|---|---|---|---|---|
| GLYCEROL TRIACETATE | 5.6 | 5.6 | 6.0 | 6.2 | 5.3 |
| GLYCEROL MONOSTEARATE | 8.1 | 8.0 | 7.6 | 7.6 | 5.0 |
| ACETYLATED MONOGLYCERIDE | --- | --- | --- | --- | 3.0 |
| **TOTAL PERCENT** | 100.0 | 100.0 | 100.0 | 100.0 | 100.0 |

| EXAMPLES 70-74 | | | | | |
|---|---|---|---|---|---|
| IDENTIFICATION - EXAMPLE #: GENERIC INGREDIENTS | 70 | 71 | 72 | 73 | 74 |
| ^{**} **SYNTHETIC ELASTOMER** ^{**} | | | | | |
| POLYISOBUTYLENE ELASTOMER | 11.6 | 10.9 | 11.6 | 12.4 | 11.9 |
| POLYVINYL ACETATE | 37.8 | 37.5 | 31.4 | 31.0 | 37.0 |

| ^{**} **ELASTOMER PLASTICIZERS** ^{**} | | | | | |
|---|---|---|---|---|---|
| GLYCEROL ESTERS OF ROSIN | --- | --- | --- | --- | --- |
| GLYCEROL ESTERS OF PART HYD ROSIN | 19.8 | 20.6 | 19.8 | 21.1 | 20.3 |

| ^{**} **FILLER** ^{**} | | | | | |
|---|---|---|---|---|---|
| CALCIUM CARBONATE | --- | --- | --- | --- | --- |
| TALC | 17.0 | 19.5 | 22.7 | 22.2 | 16.7 |

| ^{**} **SOFTENER** ^{**} | | | | | |
|---|---|---|---|---|---|
| GLYCEROL TRIACETATE | 5.6 | 5.2 | 5.8 | 4.3 | 5.7 |
| GLYCEROL MONOSTEARATE | 3.2 | 3.1 | 2.9 | 2.5 | 4.5 |
| ACETYLATED MONOGLYCERIDE | 5.0 | 3.2 | 5.8 | 6.5 | 3.9 |
| **TOTAL PERCENT** | 100.0 | 100.0 | 100.0 | 100.0 | 100.0 |

The wax-free gum base of the invention constitutes from 5 to 95 weight percent of the chewing gum, more typically from 10 to 50 weight percent of the chewing gum, and most commonly from 20 to 35 weight percent of the chewing gum. The gum base is typically prepared by adding an amount of the elastomer or mixture of elastomers, the elastomer plasticizers and filler to a heated sigma blade mixer with a front to rear blade speed ratio of typically 2:1. The initial amounts of ingredients are determined by the working capacity of the mixing kettle in order to attain a proper consistency. Similarly, different gum bases can be blended to achieve a final gum base to be used in the chewing gums of this invention. Both gum bases should be free of wax, if blended gum bases are used. After the initial ingredients have massed homogeneously, the balance of the elastomer plasticizer, filler, fats, oils and softeners, etc. are added in a sequential manner until a completely homogeneous molten mass is attained. This can usually be achieved in one to four hours, depending on the formulation. The final mass temperature can be from 60°C to 150°C, more preferably from 80°C to 120°C. The completed molten mass is emptied from the mixing kettle into coated or lined pans, extruded or cast into any desirable shape and allowed to cool and solidify.

Although the above method for making base is typical and applies to both chewing and bubble bases, it has been found that there is a preferred method for making the bubble bases described in this invention.

First, all of the polyvinyl acetate and portions of the polyisobutylene, or other elastomers, and filler are added and blended in a heated sigma blade mixer. Softeners, including fats and oils, and other softeners such as glycerol triacetate (triacetin) and/or acetylated monoglyceride are then added along with a second portion of each of polyisobutylene and filler. The acetylated monoglyceride or the triacetin, or both may be added at the end of the process if desired and still not alter the chewing texture of the gum made from the base.

Next, the rest of the polyisobutylene and filler are added along with the elastomer plasticizer. Finally, the remaining ingredients such as glycerol monostearate, any remaining fats and/or oils, emulsifiers and softeners, and antioxidants may be added. Colorant may be added at any time during the mixing process and is preferably added at the start.

There are some variations to the above described preferred method which in no way limits the method as described. Those skilled in the art of gum base manufacture may be able to appreciate any minor variations.

In producing wax-containing gum bases high in polyvinyl acetate, and particularly those high in high molecular weight polyvinyl acetate, it is necessary to improve blending of the ingredients by removing the heat applied to the sigma blade mixer at some point in the process. This reduces the temperature of the gum base and causes greater compatibility of its ingredients. In the inventive gum base process for making the inventive gum base free of wax, there is no need to remove the heat applied. The degree of incompatibility is greatly reduced since there is no wax present. Nevertheless, heat is preferably removed at from 30 minutes to 90 minutes into the mixing time of the base production process.

In addition to the water-insoluble gum base, a typical chewing gum composition includes a water-soluble bulk portion and one or more flavoring agents. However, in this invention, the wax-free gum base of the invention is used in chewing gum compositions which contain from 0.10 weight percent to 2.0 weight percent moisture (free water). This is at least partially accomplished by using essentially dried water-soluble ingredients, which are referred to herein as essentially dried water-soluble sweeteners. These sweeteners can also include certain binders, certain bulking agents, certain sugars, sugar alcohols, dried and modified syrups and high-intensity sweeteners.

The water-soluble portion of the chewing gum may include softeners, bulk sweeteners, high-intensity sweeteners, binders, dried or modified, low water syrups, flavoring agents and combinations thereof. Softeners are added to the chewing gum in order to optimize the chewability and mouth feel of the gum. The softeners, which are also known as water-soluble plasticizers or plasticizing agents, generally constitute from 0.5 to 15% by weight of the chewing gum. The softeners may include glycerin, triacetin, lecithin, glycerol monostearate, hydroxylated lecithin, agar, carrageenan, and combinations thereof. Aqueous sweetener solutions such as those containing sorbitol, hydrogenated starch hydrolyzates, corn syrup and combinations thereof, may also be used as softeners and binding agents in chewing gum. However, in our invention, the solutions, if used, are concentrated so as to contain at least 50 weight percent solids, preferably at least 70 weight percent solids, and most preferably the sweeteners, bulking agents, and binders are modified syrups with less than 10 weight percent water, or preferably from 2.5 to 7.5 weight percent water, or are solids, granulated or powdered, which solids contain less than 10 weight percent water (moisture) and preferably contain from 0.0 to 5.0 weight percent water.

A preferred binding agent is a product referred to as coevaporated Lycasin¹, a glycerin and/or propylene glycol modified hydrogenated starch hydrolyzate syrup containing from 7 to 8 weight percent water and from 65 to 70% hydrogenated starch hydrolyzate solids, the remainder being glycerin, propylene glycol, or mixtures thereof.
¹Lycasin is a trademark of the Roguette-Freres Company.

Bulk sweeteners constitute from 5 to 95% by weight of the chewing gum, more typically from 20 to 80% by weight of the chewing gum and most commonly from 30 to 60% by weight of the chewing gum. Bulk sweeteners may include both sugar and sugarless sweeteners and components, as long as these sugar and sugarless sweeteners and components contain moisture at the above levels and are used in the formulation of our wax-free chewing gums such that the total amount of moisture in the wax-free low moisture chewing gum is less than 2.0 weight percent, preferably from 0.10 to 2.0 weight percent water, based on the total weight of the chewing gum. Sugar sweeteners may include saccharide containing components including but not limited to sucrose, dextrose, maltose, dextrin, dried invert sugar, fructose, levulose, galactose, corn syrup solids, high maltose syrup, invert/high fructose syrup, maltotriose, glyceraldehyde, erytrose, xylose, lactose, leucrose, L-sugars, fructooligosaccharide and low calorie bulking agents such as indigestible dextrin, guar gum hydrolyzate, oligofructose, polydextrose, and the like, alone or in combination. Sugarless sweeteners include components with sweetening characteristics but are devoid of the commonly known sugars. Sugarless sweeteners include but are not limited to sugar alcohols such as sorbitol, mannitol, xylitol, hydrogenated starch hydrolyzates, maltitol, lactitol, erythritol, cellobiitol, and the like, alone or in combination.

High-intensity sweeteners may also be present and are commonly used with sugarless sweeteners. When used, high-intensity sweeteners typically constitute from 0.001 to 5% by weight of the chewing gum, preferably from 0.001 to 1% by weight of the chewing gum. Typically, high-intensity sweeteners are at least 20 times sweeter than sucrose. These may include but are not limited to sucralose, aspartame, salts of acesulfame, alitame, saccharin and its salts, cyclamic acid and its salts, glycyrrhizin, dihydrochalcones, thaumatin, monellin, stevia and the like, alone or in combination.

A preferred sugarless sweetener with particularly good binding properties in our invention is a coevaporated Lycasin. This material is manufactured by adding glycerin to a commercially available Hydrogenated Starch Hydrolyzate (HSH) Syrup, (Lycasin® , a product of the Roquette-Freres Company), followed by heating to sufficient temperature and for sufficient time to remove at least a reasonable portion of the water originally contained in the HSH product. The preferred coevaporated Lycasin product used as a sugarless sweetener/bulking agent/binder contains at least 20 to 30 weight percent glycerin and no more than from 5.0 to 10.0 weight percent water, preferably from 7.0 to 8.0 weight percent water, the reminder being hydrogenated starch hydrolyzate solids.

Most preferably, the coevaporated Lycasin contains from 22 weight percent glycerin to 28 weight percent glycerin. In the form predominantly used, the coevaporated Lycasin™ contains about 7.5 weight percent H₂O and about 25 weight percent glycerin, the remainder being HSH solids.

Sweeteners and other active ingredients can be incorporated into chewing gum after being encapsulated in order to modify their release. The most common ways of modifying the release of the active ingredients include spray drying, spray chilling, fluid-bed coating, coacervation, absorption, extrusion encapsulation, and other standard encapsulating techniques. The active ingredient may be modified in a multiple step process comprising any of the processes noted. Encapsulating agents that can be used include polyvinyl acetate, acrylic polymers and copolymers, carboxyvinyl polymer, polyamides, polystyrene, polyvinyl pyrrolidone, natural waxes, zein, shellac, agar, alginates, a wide range of cellulose derivatives including ethyl cellulose, methyl cellulose, sodium hydroxymethyl cellulose, and hydroxypropylmethyl cellulose and sodium carboxymethyl cellulose, dextrin, gelatin, modified starches, acacia, maltodextrin, gum arabic, xanthan gum, relatin and pectin.

Combinations of sugar and/or sugarless sweeteners may be used in chewing gum. The sweetener may also function in the chewing gum in whole or in part as a water-soluble bulking agent. Additionally, the softener may also provide additional sweetness such as with aqueous sugar or alditol solutions.

Flavoring agents should generally be present in the chewing gum in an amount within the range of from 0.1 to 15% by weight of the chewing gum, preferably from 0.2 to 5% by weight of the chewing gum, most preferably from 0.5 to 3% by weight of the chewing gum. Flavoring agents may include essential oils, synthetic flavors or mixtures thereof including but not limited to oils derived from plants and fruits such as citrus oils, fruit essences, peppermint oil, spearmint oil, other mint oils, clove oil, oil of wintergreen, anise and the like. Artificial flavoring agents and components may also be used. Natural and artificial flavoring agents may be combined in any sensorially acceptable fashion.

Optional ingredients such as colors, food acidulants, emulsifiers, pharmaceutical agents, vitamins, and additional flavoring agents may also be included in chewing gum.

One of the additional benefits of formulating the wax-free, low moisture chewing gums of this invention is the increased shelf life of the product, not only from the point of view of flexibility enhancement and the lack of brittleness development with time, but also from the point of view of high-intensity sweetener stability with time. Some high-intensity sweeteners such as sucralose, alitame, acesulfame K, aspartame, and the like undergo chemical reactions in the presence of water, which reactions degrade the sweetener molecules leading to a loss of sweetening capacity, or a lowered sucrose equivalent (S.E.).

By removing water, or by formulating our chewing gums using ingredients low in H₂O, such that the final wax-free chewing gum contains less than 2.0 weight percent water, preferably from 0.10 weight percent to 2.0 weight percent H₂O, the high-intensity sweeteners with demonstrated D.E. loss with time may be used more effectively, providing sweetness even over a long storage time.

Chewing gum is generally manufactured by sequentially adding the various chewing gum ingredients to any commercially available mixer known in the art. After the ingredients have been thoroughly mixed, the gum mass is discharged from the mixer and shaped into the desired form such as by rolling into sheets and cutting into sticks, extruding into chunks, or casting into pellets. Generally, the ingredients are mixed by first melting the gum base and adding it to the running mixer. The gum base may alternatively be melted in the mixer. Color and emulsifiers can be added at this time.

A softener such as glycerin, or the coevaporated Lycasin, can be added next along with high solids corn syrup or corn syrup solids and part of the bulk portion. Further parts of the high solids bulk portion as well as additional softener may then be added to the mixer, if needed. Flavoring agents are typically added with the final part of the bulk portion. The entire mixing process typically takes from five to fifteen minutes, although longer mixing times are sometimes required. Those skilled in the art will recognize that variations of this mixing procedure, or other mixing procedures, may be followed.

The following formulas are illustrative of types of products which may be produced. All ingredient levels are expressed in weight percent. Examples 75 to 96 illustrate non-tack, reduced-tack, and regular tack chewing gums of the present invention. As can be seen, there is much latitude in the selection of flavors, sweeteners and ingredient levels. Examples 75 to 90 describe. sugarless gums. Encapsulated sweeteners are used to extend sweetness and flavor and to assist in protecting the artificial sweetener from degradation during storage. However, the use of encapsulated sweeteners may be less because the low moisture wax-free gums present a matrix which is more conducive to high-intensity sweetener stability. All of these examples illustrate the low moisture wax-free chewing gum products of this invention having moisture levels below 2%.

**Table 4:**

| **Sugarless Non-Tack** **And Reduced Tack Gums With Low Moisture** | | | | | |
|---|---|---|---|---|---|
| **EXAMPLES 75-79** | | | | | |
| Example | 75 | 76 | 77 | 78 | 79 |
| Base Example # | 19 | 7 | 24 | 24 | 8 |
| Base % | 27.11 | 21.21 | 29.48 | 22.58 | 18.11 |
| Flavor | 0.98 (Peppermint) | 0.97 (Spearmint Oil) | 1.15 (Peppermint Oil) | 1.47 (Cinnamon Flavor) | 1.00 (Wintergreen Oil) |
| Flavor | 0.20 (Spray Dried Mentholl | 0.15 (Peppermint Oil) | 0.21 (Spearmint Oil) | --- | 0.27 (Peppermint Oil) |
| Sorbitol | 65.06 | 59.79 | 55.15 | 60.01 | 57.53 |
| Calcium Carbonate | --- | 2.11 | --- | 2.00 | 4.70 |
| Sorbitol Solution^{*} | --- | --- | --- | --- | --- |
| Coevaporated Lycasin^{**} (7.5% water, 25% glycerin) | 9.16 | --- | 8.11 | --- | 8.88 |
| Glycerin | 4.11 | 12.11 | 3.11 | 11.61 | 7.10 |
| Mannitol | 3.10 | 3.11 | 2.66 | 2.00 | 2.00 |
| Encapsulated Aspartame | --- | 0.25 | --- | --- | 0.21 |
| Free Aspartame | --- | 0.10 | --- | --- | 0.10 |
| Encapsulated Alitame | 0.05 | --- | 0.10 | --- | --- |
| Free Alitame | --- | --- | 0.03 | --- | --- |
| Encapsulated Sucralose | --- | --- | --- | 0.21 | --- |
| Free Sucralose | 0.08 | --- | --- | 0.02 | --- |
| Lecithin | 0.15 | 0.20 | --- | 0.10 | 0.10 |
| TOTAL | 100 | 100 | 100 | 100 | 100 |

| | | | | | |
|---|---|---|---|---|---|
| ^{*} At least 70 weight percent Sorbitol. | | | | | |
| ^{**} 7.5% water, 25% glycerin, 67.5% HSH solids. | | | | | |

**Table 5:**

| Reduced And Regular Tack Low Calorie Gums | | | | | |
|---|---|---|---|---|---|
| **EXAMPLES 80-84** | | | | | |
| Example | 80 | 81 | 82 | 83 | 84 |
| Base Example | 3 | 19 | 13 | 52 | 44 |
| Base % | 24.7 | 19.2 | 24.0 | 19.2 | 19.2 |
| Sorbitol Solids | 6.0 | --- | --- | --- | --- |
| Mannitol Solids | 1.0 | --- | --- | --- | --- |
| Com Syrup Solids | --- | 6.0 | 24.6 | 18.5 | 6.0 |
| Sucrose | --- | 10.0 | --- | 10.0 | 10.0 |
| Lactose | --- | 5.0 | --- | --- | 5.0 |
| Glycerin | 16.4 | 8.9 | 0.4 | 1.4 | 8.9 |
| Lecithin | 0.2 | --- | --- | --- | --- |
| Flavor | 1.4 | 0.9 | 1.0 | 0.9 | 0.9 |
| Oligofructose | --- | 50.0 | 50.0 | --- | --- |
| Fructooligosa ccharide | -- | --- | --- | 50.0 | 50.0 |
| Color | 0.05 | --- | --- | --- | --- |
| Aspartame | 0.25 | --- | --- | --- | --- |
| High Mol. Weight Indigestible Dextrin | --- | --- | --- | --- | --- |
| Low Mol. Weight Indigestible Dextrin | 50.0 | --- | --- | --- | --- |
| Indigestible Dextrin Syrup | --- | --- | --- | --- | --- |
| TOTAL | 100 | 100 | 100 | 100 | 100 |
| Sorbrtol Solids. Mannitol Solids, and Corn Syrup Solids. each contain less than 10 weight percent water. | | | | | |

Examples 85 to 90 are sugarless products made with the non-reduced-tack bases of the present invention. Examples 91 to 96 are equivalent sugar products.

**Table 6:**

| Regular Tack Sugarless Gums-Low Moisture | | | | | | |
|---|---|---|---|---|---|---|
| **EXAMPLES 85-90** | | | | | | |
| Example | 85 | 86 | 87 | 88 | 89 | 90 |
| Base Example # | 32 | 44 | 51 | 36 | 52 | 44 |
| Base % | 21.76 | 22.07 | 24.00 | 20.97 | 26.00 | 20.08 |
| Flavor | 0.92 (Peppermint Oil) | 0.77 (Spearmint Oil) | 0.83 (Spearmint Oil) | 0.99 (Cinnamon Flavor) | 0.97 (Peppermint Oil) | 1.04 (Peppermint Oil) |
| Flavor | - | 0.24 (Peppermint Oil) | - | - | - | 0.16 (Spray Dried Menthol) |
| Sorbitol | 46.54 | - | - | 63.61 | 51.50 | - |
| Coevaporated Lycasin (7.5% Water. 25% Glycerin) | 8.47 | 7.84 | 11.20 | 7.76 | --- | --- |
| Glycerin | 5.19 | 4.91 | 2.10 | 4.20 | 12.00 | --- |
| Mannitol | 1.77 | - | - | 2.01 | 3.11 | --- |
| Xylitol | 15.11 | - | 12.11 | - | 6.27 | 78.16 |
| Palatinit (Hydrogenated Isomaltulose) | - | 63.97 | 49.60 | --- | --- | --- |
| Aspartame | --- | --- | --- | 0.14 | --- | 0.14 |
| Encapsulated Aspartame | --- | --- | --- | 0.22 | --- | 0.22 |
| Alitame | --- | 0.02 | 0.02 | --- | --- | --- |
| Encapsulated Alitame | --- | 0.04 | 0.04 | --- | --- | --- |
| Sucralose | 0.11 | --- | --- | --- | 0.15 | --- |
| Lecithin | 0.13 | 0.14 | 0.10 | 0.10 | --- | 0.20 |
| TOTAL | 100 | 100 | 100 | 100 | 100 | 100 |

**Table 7:**

| Regular Tack Sugar Gums-Low Moisture | | | | | | |
|---|---|---|---|---|---|---|
| **EXAMPLES 91-96** | | | | | | |
| Example | 91 | 92 | 93 | 94 | 95 | 96 |
| Base Example # | 57 | 62 | 44 | 39 | 51 | 40 |
| Base % | 22.38 | 20.60 | 20.08 | 23.11 | 20.02 | 21.01 |
| Flavor | 0.88 (Peppermint Oil) | 0.58 (Spearmint Oil) | 0.86 (Peppermint Oil) | 0.91 (Peppermint Oil) | 1.21 (Fruit Flavor) | 0.88 (Winter-green Flavor) |
| Flavor | --- | --- | --- | 0.21 (Speermint Oil) | --- | 0.20 (Spray Dned Menthol) |
| Encapsulated Aspartame | --- | --- | --- | 0.10 | --- | --- |
| Encapsulated Acesulfame K | --- | --- | --- | --- | 0.15 | --- |
| Sucralose | --- | --- | --- | --- | --- | 0.09 |
| Sugar | 58.39 | 59.49 | 62.66 | 59.97 | 63.58 | 62.51 |
| Corn Syrup Solids ^{*} | 17.20 | 18.50 | 15.40 | 14.70 | 13.88 | 14.19 |
| Glycenn | 1.09 | 0.83 | 1.00 | 1.00 | 1.05 | 1.02 |
| Lecithin | 0.05 | --- | --- | --- | .10 | --- |
| TOTAL | 100 | 100 | 100 | 100 | 100 | 100 |

| | | | | | | |
|---|---|---|---|---|---|---|
| ^{*} Corn Syrup Solids containing less then 10 weight percent water. | | | | | | |

Examples 97 to 108 are examples of inventive coated pellet gums made with non-wax bases and essentially low water ingredients. The gum products of these examples are formed into pellets or balls for subsequent coating. Examples 97 to 102 are sugar pellets which could be coated with sugar syrups. Such syrups may contain modified starch (0 to 6.0%), compatible flavors and colors (0 to 0.30%), vegetable gums such as gum arabic and cellulose derivatives such as hydroxypropyl methyl cellulose (0 to 20%) in addition to sucrose or starch hydrolyzate in the form of coevaporated Lycasin.

Examples 103 to 108 are sugarless pellets which can be coated with sugar alcohol solutions such as those of sorbitol, xylitol and palatinit which are then dried. These syrups may also contain the same modifiers listed above for sugar syrups.

In both cases (sugar and sugarless) dry coating agent (sugar or sugar alcohol) may be added between layers of coating syrup, a process known as dry charging or soft panning.

Coating may be carried out by any suitable process, most often using a conventional pan, side vented pans, high capacity pans such as those made by Driam or Dumouline, or by continuous panning techniques.

**Table 8:**

| Sugar Pellet Gums For Coating | | | | | | |
|---|---|---|---|---|---|---|
| **EXAMPLES 97-102** | | | | | | |
| Example | 97 | 98 | 99 | 100 | 101 | 102 |
| Base Example # | 40 | 36 | 37 | 51 | 52 | 47 |
| Base % | 24.32 | 24.28 | 24.30 | 24.27 | 25.17 | 24.33 |
| Flavor | 0.55 (Spearmint Oil) | 0.73 (Peppermint Oil) | 2.56 (Licorice Powder) | 0.77 (Fruit Flavor) | 0.47 (Spearmint Oil) | 0.61 (Spearmint Oil) |
| Flavor | --- | --- | 0.60 (Menthol/ Anethol | --- | 0.15 (Peppermint Oil) | --- |
| Sugar | 52.97 | 52.87 | 50.94 | 52.85 | 52.59 | 52.84 |
| Coevaporated Lycasin | 22.16 | 22.12 | 21.60 | 22.11 | 21.62 | 22.22 |
| TOTAL | 100 | 100 | 100 | 100 | 100 | 100 |

**Table 9:**

| Sugarless Pellet Gums For Coating | | | | | | |
|---|---|---|---|---|---|---|
| **EXAMPLES 103-108** | | | | | | |
| Example | 103 | 104 | 105 | 106 | 107 | 108 |
| Base Example # | 33 | 26 | 40 | 29 | 36 | 35 |
| Base % | 31.01 | 33.00 | 32.71 | 33.03 | 30.97 | 31.45 |
| Flavor | 1.20 (Spearmint Oil) | 1.30 (Pepper mint Oil) | 1.09 (Speermint Oil) | 1.50 (Fruit Flavor) | 1.01 (Peppermint Oil) | 1.31 (Fruit Flavor) |
| Flavor | --- | 0.50 (Menthol) | 0.17 (Peppermint Oil) | 0.50 (Lemon Flavor) | 0.21 (Spray Dried Menthol) | --- |
| Sorbitol | 51.46 | 44.06 | 45.56 | 43.81 | 46.69 | 45.99 |
| Calcium Carbonate | 10.01 | 13.00 | 12.16 | 12.93 | 13.04 | 13.33 |
| Glycerin | 6.14 | 8.00 | 8.00 | 7.98 | 7.82 | 7.30 |
| Encapsulated Aspartame | 0.12 | 0.14 | 0.21 | 0.25 | 0.18 | 0.62 |
| Free Aapartame | 0.06 | --- | 0.10 | --- | 0.08 | --- |
| TOTAL | 100 | 100 | 100 | 100 | 100 | 100 |

Inventive bubble gums may be prepared using the bubble gum bases of the present invention such as those listed in Examples 56 to 74. Illustrative formulations are given as Examples 109 to 119. Examples 109 to 113 are sugar bubble gum formulas. Note that Examples 110 and 113 use blends of two inventive bases. This is a technique to optimize processing and texture properties while minimizing the necessity of maintaining different bases for each product and without having additional custom bases compounded. Examples 114 to 119 are sugarless bubble gum formulas.

**Table 10:**

| Sugar Bubble Gums | | | | | |
|---|---|---|---|---|---|
| **EXAMPLES 109-113** | | | | | |
| Example | 109 | 110 | 111 | 112 | 113 |
| Base Example # | 69 | 72/74 | 72 | 59 | 72/69 |
| Base % | 24.02 | 11.00/ 11.00 | 20.01 | 20.0 | 9.00/ 13.00 |
| Flavor | 0.80 (Fruit Flavor) | 0.85 (Cream Soda) | 0.60 (Blueberry) | 0.60 (Strawberry) | 0.80 (Cream Soda) |
| Flavor | --- | 0.03 (Vanilla) | - | --- | 0.02 (Vanilla) |
| Sugar | 55.10 | 59.54 | 59.00 | 59.75 | 57.98 |
| Corn Syrup Solids^{*} | 17.68 | 16.53 | 17.99 | 16.88 | 17.44 |
| Lecithin | 0.60 | 0.35 | 0.51 | 0.50 | 0.45 |
| Glycerin | 1.74 | 0.70 | 0.81 | 1.49 | 1.31 |
| Color | 0.06 (Red) | --- | 0.48 (Blue) | 0.08 (Red) | --- |
| Citric Acid | --- | --- | 0.60 | 0.70 | --- |
| TOTAL | 100 | 100 | 100 | 100 | 100 |

| | | | | | |
|---|---|---|---|---|---|
| ^{*} Corn Syrup Solids containing less than 10 weight percent water. | | | | | |

**Table 11:**

| Sugarless Bubble Gum | | | | | | |
|---|---|---|---|---|---|---|
| **EXAMPLES 114-119** | | | | | | |
| Example | 114 | 116 | 116 | 117 | 118 | 119 |
| Base Example # | 63 | 64 | 69 | 71 | 71 | 60 |
| Base % | 24.00 | 24.59 | 28.00 | 29.12 | 30.10 | 26.71 |
| Flavor | 1.20 (Frult Flavor) | 1.41 (Fruit Flavor) | 1.71 (Grape Flavor) | 1.34 (Strawberry Flavor) | 1.11 (Lemon Flavor) | 1.23 (Peach Flavor) |
| Sorbitol | 51.47 | 51.88 | 46.03 | 49.66 | 46.39 | 49.33 |
| Calcium Carbonate | 5.00 | 4.31 | - | - | - | - |
| Tale | --- | --- | 3.71 | 3.44 | 1.99 | 3.44 |
| Lecithin | 1.00 | 0.91 | 0.84 | 0.61 | 0.86 | 0.75 |
| Citric Acid | --- | --- | --- | 0.31 | 0.31 | --- |
| Malic Acid | --- | --- | 0.21 | 0.11 | 0.31 | 0.16 |
| Tartaric Acid | --- | --- | 0.36 | 0.11 | --- | --- |
| Glycerin | 17.00 | 10.00 | 9.00 | 15.09 | 8.21 | 12.00 |
| Coevaporated Lycesin^{*}™ | --- | 6.79 | 9.61 | --- | 10.41 | 6.00 |
| Color | 0.02 (Red) | 0.01 (Red) | 0.06 (Red/Blue) | 0.02 (Red) | 0.06 (Yellow) | 0.01 (Red) |
| Encapsulated Aspartame | 0.27 | --- | 0.41 | --- | --- | 0.31 |
| Free Aspartame | 0.04 | --- | 0.06 | --- | 0.17 | 0.06 |
| Acesulfame K | --- | --- | --- | 0.11 | --- | --- |
| Encapsulated Alitame | --- | 0.10 | --- | --- | --- | --- |
| Sucralose | --- | --- | --- | 0.09 | 0.09 | --- |
| TOTAL | 100 | 100 | 100 | 100 | 100 | 100 |

| | | | | | | |
|---|---|---|---|---|---|---|
| ^{*} Coevaporated Lycasin containing 7.6 weight percent water and 25.0 weight percent glycerin. | | | | | | |

## Claims

1. A wax-free low moisture chewing gum containing from 0.10 wt% to 2 wt% water and comprising from 10 to 90 wt% of a wax-free gum base comprising:
from 10 to 60 wt% of at least one synthetic elastomer;
at least one natural elastomer in an amount of 30 wt% or less;
from 5 to 55 wt% of at least one elastomer plasticizer;
from 4 to 40 wt% filler; and
from 5 to 40 wt% of at least one fat oil or softener; said chewing gum further comprising from 0.001 to 70 wt% sweetener, and from 0.01 to 10 wt% flavouring agent.

2. A chewing gum as claimed in claim 1, wherein at least one natural elastomer is selected from the group consisting of jelutong, lechi caspi, perillo, sorva, massaranduba balata, massaranduba chocolate, nispero, rosin dinha, chicle, gutta hang kang, smoked or liquid latex, guayule, chiquibul, crown gum, pendare, venezuelau chicle, leche de vaca, niger gutta, tunu, and chilte.

3. A chewing gum as claimed in claim 1 or claim 2, wherein the natural elastomer is selected from the group consisting of jelutong, sorva, chicle, massaranduba balata, and combinations thereof.

4. A chewing gum as claimed in any one of claims 1 to 3 wherein the gum base comprises synthetic elastomer selected from the group consisting of polyisobutylene, butadiene-styrene copolymer, polyvinyl acetate, vinyl acetate-vinyl laurate copolymer, polyisoprene, isobutylene-isoprene, copolymer, and combinations thereof.

5. A chewing gum as claimed in any one of claims 1 to 3, wherein synthetic elastomer is selected from the group consisting of styrene-butadiene copolymer, isopreneisobutylene copolymer, polyisobutylene, butyl rubber, polyvinyl acetate and combinations thereof.

6. A chewing gum as claimed in any one of claims 1 to 3 where in the gum base comprises synthetic elastomers selected from 1 to 20 wt% styrene-butadiene rubber, from 10 to 80 wt% polyisobutylene, and from 10 to 50 wt% butyl rubber, said elastomers being present, as total elastomer.

7. A chewing gum as claimed in any preceding claim wherein the elastomer plasticizer in the gum base is selected from the group consisting of glycerol esters of rosin, glycerol esters of partially hydrogenated rosin, glycerol esters or polymerized rosin, glycerol esters or partially dimerized rosin, partially hydrogenated methyl esters of rosin, glycerol esters of tal oil rosin, pentaerythritol esters of rosin, methyl esters of rosin, pentaerythritol esters of partially hydrogenated rosin, synthetic terpene resin, natural terpene resin, and combinations thereof.

8. A chewing gum as claimed in any one of claim 1 to 6, wherein the elastomer plasticizer is selected from the group consisting of glycerol ester of wood rosin, glycerol ester of partially hydrogenated wood rosin, terpene resins and combinations thereof.

9. A chewing gum as claimed in any one of claims 1 to 6, wherein the elastomer plasticizer is selected from the group consisting of glycerol esters of partially hydrogenated rosin, methyl esters of rosin, glycerol esters of rosin, terpene resin, and combinations thereof.

10. A chewing gum as claimed in any one of claims 1 to 9 wherein the filler in the gum base is selected from the group consisting of calcium carbonate, magnesium carbonate, talc, ground limestone, magnesium silicate, aluminum silicate, clay, alumina, titanium dioxide, mono-calcium phosphates, di-calcium phosphates, tri-calcium phosphates, cellulose, and combinations thereof.

11. A chewing gum as claimed in any one of claims 1 to 9, wherein the filler is selected from the group consisting of calcium carbonate, talc, and combinations thereof.

12. A chewing gum as claimed in any preceding claim wherein the softener in the gum base is selected from the group consisting of tallow, hydrogenated tallow, hydrogenated vegetable oils, partially hydrogenated vegetable oils, cocoa butter, glycerol monostearate, monoglycerides, diglycerides, triglycerides, acetylated monoglycerides, glycerol triacetate, lecithin, fatty acids, glycerol diacetate, lanolin, and combinations thereof.

13. A chewing gum as claimed in any one of claims 1 to 11, wherein the fats, oils, or softeners are selected from the group consisting of hydrogenated and partially hydrogenated vegetable oils, glycerol monostearate, glycerol triacetate, lecithin, acetylated monoglyceride and combinations thereof.

14. A chewing gum as claimed in any one of claims 1 to 13 having reduced tack properties, further comprising an essentially dried solids bulk portion, which bulk portion contains from 0.10 to 2 wt% water.

15. A chewing gum as claimed in any previous claim wherein the sweetener is at least one low moisture sweetener which contributes only from 0.10 wt% to 2 wt% water to the wax-free low moisture chewing gum.

16. A chewing gum of claim 15 wherein the low moisture sweetener is selected from sugar alcohols, high-intensity sweeteners, and mixtures thereof.

17. A chewing gum of claim 15 wherein the low moisture water-soluble sweetener is selected from at least one sweetener from the group consisting of sugars, sugar alcohols, modified carbohydrate syrups, high-intensity sweeteners, and mixtures thereof.

18. A chewing gum as claimed in any one of claims 1 to 14 wherein at least one sweetener comprises glycerin coevaporated hydrogenated starch hydrolyzate comprising from 20 to 30 wt% glycerin, from 5 to 10 wt% water, and from 60 to 75 wt% hydrogenated starch hydrolyzate solids.

19. A chewing gum as claimed in claim 18 wherein the glycerin coevaporated hydrogenated starch hydrolyzate comprises from 1 to 50 wt% of the total weight of the chewing gum.

20. A chewing gum as claimed in anyone of claims 1 to 19 the gum base comprising from 20 to 60 wt% of at least one synthetic elastomer.

21. A chewing gum as claimed in any one of claims 1 to 20 comprising from 20 to 50 wt% of a gum base comprising:
from 25 to 45 wt% of at least one synthetic elastomer;
from 10 to 40 wt% of at least one elastomer plasticizer;
from 5 to 30 wt% filler; and
from 15 to 35 wt% of at least one fat, oil, or softener.

22. A chewing gum as claimed in any one of claims 1 to 20 comprising from 20 to 50 wt% of a gum base comprising:
from 12 to 30 wt% of at least one natural elastomer;
from 20 to 40 wt% of at least one synthetic elastomer;
from 5 to 25 wt% of at least one elastomer plasticizer;
from 4 to 25 wt% filler; and
from 15 to 30 wt% of at least one fat, oil, or softener.

23. A chewing gum as claimed in any one of claims 1 to 20 comprising a gum base comprising:
from 30 to 60 wt% of at least one synthetic elastomer;
from 5 to 55 wt% of at least one elastomer plasticizer;
from 10 to 35 wt% filler; and
from 5 to 25 wt% of at least one fat, oil, or softener.

24. A chewing gum as claimed in any one of claims 1 to 20 wherein a wax-free gum base comprises, by weight of the gum base:
from 10 to 60 wt% synthetic elastomer;
from 0 to 30 wt% natural elastomer;
from 5 to 55 wt% elastomer plasticizer;
from 4 to 40 wt% filler;
from 5 to 40 wt% fat, oil, softener, emulsifier; and from 0 to 1 wt% hygroscopic agent.

25. A chewing gum as claimed in any one of claims 1 to 24 comprising, by weight of the gum:
from 10 to 90 wt% of at least one wax-free gum base;
from 0.01 to 10.0 wt% of at least one flavouring agent; and
from 0.001 to 70 wt% of at least one essentially dried water-soluble sweetener which contributes from 0.1 wt% to 2 wt% water to the chewing gum.

26. A chewing gum as claimed in any one of claims 1 to 25 wherein the chewing gum is in the form of a bubble gum comprising:
an essentially dried water-soluble bulk portion; and
one or more flavouring agents;

27. A chewing gum as claimed in any one of claims 1 to 26 wherein the gum has reduced tack to dental surfaces.

28. A chewing gum as claimed in any one of claims 1 to 27 wherein the gum is sugarless.

29. A chewing gum as claimed in any one of claims 1 to 28 wherein the gum is in the form of a coated pellet or ball.

## Patentansprüche

1. Ein wachsfreier, feuchtigkeitsarmer Kaugummi, der zwischen 0,10 Gew.-% und 2 Gew.-% Wasser enthält und zwischen 10 und 90 Gew.-% einer wachsfreien Kaugummibase beinhaltet, die
- zwischen 10 und 60 Gew.-% von mindestens einem synthetischen Elastomer,
- mindestens ein natürliches Elastomer in einer Menge von 30 Gew.-% oder weniger,
- zwischen 5 und 55 Gew.-% von mindestens einem Elastomer-Plastifiziermittel,
- zwischen 4 und 40 Gew.-% Füllstoff und
- zwischen 5 und 40 Gew.-% von mindestens einem Fettöl oder Weichmacher
beinhaltet, wobei der Kaugummi darüber hinaus zwischen 0,001 und 70 Gew.-% Süßungsmittel und zwischen 0,01 und 10 Gew.-% Aromastoff beinhaltet.

2. Kaugummi gemäß Anspruch 1, bei dem mindestens ein natürliches Elastomer aus der Gruppe bestehend aus Jelutong, Lechi Caspi, Perillo, Sorva, Massaranduba Balata, Massaranduba Chocolate, Nispero, Rosin Dinha, Chicle, Gutta Hang Kang, "smoked latex" oder "liquid latex", Guayule, Chiquibul, Crown Gum, Pendare, Venezuelan Chicle, Leche de Vaca, Niger Gutta, Tunu und Chilte ausgewählt wird.

3. Kaugummi gemäß Anspruch 1 oder Anspruch 2, bei dem das natürliche Elastomer aus der Gruppe bestehend aus Jelutong, Sorva, Chicle, Massaranduba Balata sowie Gemischen davon ausgewählt wird.

4. Kaugummi gemäß einem der Ansprüche 1 bis 3, bei dem die Kaugummibase synthetisches Elastomer beinhaltet, das aus der Gruppe bestehend aus Polyisobutylen, Butadien-Styrol-Copolymer, Polyvinylacetat, Vinylacetat-Vinyllaurat-Copolymer, Polyisopren, Isobutylen-Isopren-Copolymer sowie Gemischen davon ausgewählt wird.

5. Kaugummi gemäß einem der Ansprüche 1 bis 3, bei dem das synthetische Elastomer aus der Gruppe bestehend aus Styrol-Butadien-Copolymer, lsoprenisobutylen-Copolymer, Polyisobutylen, Butylkautschuk, Polyvinylacetat sowie Gemischen davon ausgewählt wird.

6. Kaugummi gemäß einem der Ansprüche 1 bis 3, bei dem die Kaugummibase synthetische Elastomere beinhaltet, die aus 1 bis 20 Gew.-% Styrol-Butadien-Kautschuk, 10 bis 80 Gew.-% Polyisobutylen und 10 bis 50 Gew.-% Butylkautschuk ausgewählt werden, wobei die vorhandenen Elastomere das Gesamt-Elastomer ergeben.

7. Kaugummi gemäß einem der vorstehenden Ansprüche, bei dem das Elastomer-Plastifiziermittel in der Kaugummibase aus der Gruppe bestehend aus Kolophonium-Glycerinestern, Glycerinestern von teilweise hydriertern Kolophonium, Glycerinestern von polymerisiertern Kolophonium, Glycerinestern von teilweise dimerisiertem Kolophonium, Methylestern von teilweise hydriertem Kolophonium, Glycerinestern von Tallharz, Pentaerytrit-Estern von Kolophonium, Methylestem von Kolophonium, Pentaerytrit-Estern von teilweise hydriertem Kolophonium, synthetischem Terpenharz, natürlichem Terpenharz und Gemischen davon ausgewählt wird.

8. Kaugummi gemäß einem der Ansprüche 1 bis 6, bei dem das Elastomer-Plastifiziermittel aus der Gruppe bestehend aus Glycerinester von Holzkolophonium, Glycerinester von teilweise hydriertem Holzkolophonium, Terpenharzen sowie Gemischen davon ausgewählt wird.

9. Kaugummi gemäß einem der Ansprüche 1 bis 6, bei dem das Elastomer-Plastifiziermittel aus der Gruppe bestehend aus Glycerinestem von teilweise hydriertem Kolophonium, Methylestem von Kolophonium, Glycerinestem von Kolophonium, Terpenharz sowie Gemischen davon ausgewählt wird.

10. Kaugummi nach einem der Ansprüche 1 bis 9, bei dem der Füllstoff in der Kaugummibase aus der Gruppe bestehend aus Calciumcarbonat, Magnesiumcarbonat, Talkum, gemahlenem Kalkstein, Magnesiumsilikat, Aluminiumsilikat, Kaolin, Aluminiumoxid, Titaniumdioxid, Monocalciumphosphaten, Dicalciumphosphaten, Tricalciumphosphaten, Cellulose sowie Gemischen davon ausgewählt wird.

11. Kaugummi gemäß einem der Ansprüche 1 bis 9, bei dem der Füllstoff aus der Gruppe bestehend aus Calciumcarbonat, Talkum sowie Gemischen davon ausgewählt wird.

12. Kaugummi gemäß einem der vorstehenden Ansprüche, bei dem der Weichmacher in der Kaugummibase aus der Gruppe bestehend aus Talg, hydriertem Talg, hydrierten pflanzlichen Ölen, teilweise hydrierten pflanzlichen Ölen, Kakaobutter, Glycerinmonostearat, Monoglyceriden, Diglyceriden, Triglyceriden, acetylierten Monoglyceriden, Glycerintriacetat, Lecithin, Fettsäuren, Glycerindiacetat, Lanolin sowie Gemischen davon ausgewählt wird.

13. Kaugummi nach einem der Ansprüche 1 bis 11, bei dem die Fette, Öle oder Weichmacher aus der Gruppe bestehend aus hydrierten und teilweise hydrierten pflanzlichen Ölen, Glycerinmonostearat, Glycerintriacetat, Lecithin, acetyliertem Monoglycerid sowie Gemischen davon ausgewählt werden.

14. Kaugummi nach einem der Ansprüche 1 bis 13, der verringerte klebrige Eigenschaften ausweist und darüber hinaus einen Hauptanteil von im Wesentlichen trockenen Feststoffen beinhaltet, der zwischen 0,10 und 2 Gew.-% Wasser enthält.

15. Kaugummi nach einem der vorstehenden Ansprüche, bei dem das Süßungsmittel mindestens ein feuchtigkeitsarmes Süßungsmittel ist, das nur zwischen 0,10 Gew.-% und 2 Gew.-% Wasser zu dem wachsfreien, feuchtigkeitsarmen Kaugummi beiträgt.

16. Kaugummi gemäß Anspruch 15, bei dem das feuchtigkeitsarme Süßungsmittel aus Zuckeralkoholen, Süßungsmitteln mit hoher Süßkraft (high-intensity sweeteners) sowie Gemischen davon ausgewählt wird.

17. Kaugummi gemäß Anspruch 15, bei dem das feuchtigkeitsarme, wasserlösliche Süßungsmittel aus mindestens einem Süßungsmittel der Gruppe bestehend aus Zuckern, Zuckeralkoholen, modifizierten Kohlenwasserstoffsirupen, Süßungsmitteln mit hoher Süßkraft und Gemischen davon ausgewählt wird.

18. Kaugummi gemäß einem der Ansprüche 1 bis 14, bei dem mindestens ein Süßungsmittel ein mit Glycerin eingedampftes Hydrolysat aus hydrierter Stärke beinhaltet, das zwischen 20 und 30 Gew.-% Glycerin, zwischen 5 und 10 Gew.-% Wasser und zwischen 60 und 75 Gew.-% Feststoffe von dem Hydrolysat aus hydrierter Stärke beinhaltet.

19. Kaugummi gemäß Anspruch 18, bei dem das mit Glycerin eingedampfte Hydrolysat aus hydrierter Stärke zwischen 1 und 50 Gew.-% des Gesamtgewichts des Kaugummis ausmacht.

20. Kaugummi gemäß einem der Ansprüche 1 bis 19, der zwischen 20 und 60 Gew.-% von mindestens einem synthetischen Elastomer beinhaltet.

21. Kaugummi gemäß einem der Ansprüche 1 bis 20, der zwischen 20 und 50 Gew.-% einer Kaugummibase beinhaltet, die
- zwischen 25 und 45 Gew.-% von mindestens einem synthetischen Elastomer,
- zwischen 10 und 40 Gew.-% von mindestens einem Elastomer-Plastifiziermittel,
- zwischen 5 und 30 Gew.-% Füllstoff, und
- zwischen 15 und 35 Gew.-% von mindestens einem Fett, Öl oder Weichmacher
beinhaltet.

22. Kaugummi gemäß einem der Ansprüche 1 bis 20, der zwischen 20 und 50 Gew.-% einer Kaugummibase beinhaltet, die
- zwischen 12 und 30 Gew.-% von mindestens einem natürlichen Elastomer,
- zwischen 20 und 40 Gew.-% von mindestens einem synthetischen Elastomer,
- zwischen 5 und 25 Gew.-% von mindestens einem Elastomer-Plastifiziermittel,
- zwischen 4 und 25 Gew.-% Füllstoff und
- zwischen 15 und 30 Gew.-% von mindestens einem Fett, Öl oder Weichmacher
beinhaltet.

23. Kaugummi gemäß einem der Ansprüche 1 bis 20, der eine Kaugummibase beinhaltet, die
- zwischen 30 und 60 Gew.-% von mindestens einem synthetischen Elastomer,
- zwischen 5 und 55 Gew.-% von mindestens einem Elastomer-Plastifiziermittel,
- zwischen 10 und 35 Gew.-% Füllstoff und
- zwischen 5 und 25 Gew.-% von mindestens einem Fett, Öl oder Weichmacher
beinhaltet.

24. Kaugummi gemäß einem der Ansprüche 1 bis 20, bei dem eine wachsfreie Kaugummibase:
- zwischen 10 und 60 Gew.-% synthetisches Elastomer,
- zwischen 0 und 30 Gew.-% natürliches Elastomer,
- zwischen 5 und 55 Gew.-% Elastomer-Piastifiziermittel,
- zwischen 4 und 40 Gew.-% Füllstoff,
- zwischen 5 und 40 Gew.-% Fett, Öl, Weichmacher, Emulgator und
- zwischen 0 und 1 Gew.-% hygroskopisches Mittel
bezogen auf das Gewicht der Kaugummibase beinhaltet.

25. Kaugummi gemäß einem der Ansprüche 1 bis 24, der
- zwischen 10 und 90 Gew.-% von mindestens einer wachsfreien Kaugummibase,
- zwischen 0,01 und 10,0 Gew.-% von mindestens einem Aromastoff und
- zwischen 0,001 und 70 Gew.-% von mindestens einem im Wesentlichen trockenen, wasserlöslichen Süßungsmittel, das zwischen 0,1 Gew.-% und 2 Gew.-% Wasser zu dem Kaugummi beiträgt,
bezogen auf das Gewicht des Kaugummis beinhaltet.

26. Kaugummi nach einem der Ansprüche 1 bis 25, bei dem der Kaugummi in Form von Ballonkaugummi (bubble gum) vorliegt, der
- einen im Wesentlichen trockenen, wasserlöslichen Hauptanteil und
- einen oder mehrere Aromastoffe
beinhaltet.

27. Kaugummi gemäß einem der Ansprüche 1 bis 26, der eine verringerte Klebrigkeit an den Zahnoberflächen aufweist.

28. Kaugummi nach einem der Ansprüche 1 bis 27, der zuckerfrei ist.

29. Kaugummi nach einem der Ansprüche 1 bis 28, der in Form eines Dragees oder einer beschichteten Kugel vorliegt.

## Revendications

1. Gomme à mâcher sans cire et à faible teneur en humidité, contenant de 0,10 % en poids à 2 % en poids d'eau et comprenant de 10 à 90 % en poids d'une base de gomme sans cire comprenant :
de 10 à 60 % en poids d'au moins un élastomère synthétique ;
au moins un élastomère naturel en une quantité de 30 % en poids ou moins ;
de 5 à 55 % en poids d'au moins un plastifiant pour élastomère ;
de 4 à 40 % en poids de charge ; et
de 5 à 40 % en poids d'au moins une graisse, une huile ou un émollient ; ladite gomme à mâcher comprenant, en outre, de 0,001 à 70 % en poids d'édulcorant et de 0,01 à 10 % en poids d'agent aromatisant.

2. Gomme à mâcher selon la revendication 1, dans laquelle au moins un élastomère naturel est choisi dans l'ensemble constitué par les jelutong, lechi caspi, perillo, sorva, massaranduba balata, massaranduba chocolate, nispero, rosin dinha, chicle, gutta hang kang, latex fumé ou liquide, guayule, chiquibul, crown gum, pendare, chicle du Venezuela, leche de vaca, niger gutta, tunu et chilte.

3. Gomme à mâcher selon la revendication 1 ou la revendication 2, dans laquelle l'élastomère naturel est choisi dans l'ensemble constitué par les jelutong, sorva, chicle, massaranduba balata et des combinaisons de ceux-ci.

4. Gomme à mâcher selon l'une quelconque des revendications 1 à 3, dans laquelle la base de gomme comprend un élastomère synthétique choisi dans l'ensemble constitué par les polyisobutylène, copolymère de butadiène-styrène, acétate de polyvinyle, copolymère d'acétate de vinyle-laurate de vinyle, polyisoprène, copolymère d'isobutylène-isoprène et des combinaisons de ceux-ci.

5. Gomme à mâcher selon l'une quelconque des revendications 1 à 3, dans laquelle l'élastomère synthétique est choisi dans l'ensemble constitué par les copolymère de styrène-butadiène, copolymère d'isoprène-isobutylène, polyisobutylène, butylcaoutchouc, acétate de polyvinyle et des combinaisons de ceux-ci.

6. Gomme à mâcher selon l'une quelconque des revendications 1 à 3, dans laquelle la base de gomme comprend des élastomères synthétiques choisis parmi 1 à 20 % en poids de caoutchouc de styrène-butadiène, de 10 à 80 % en poids de polyisobutylène et de 10 à 50 % en poids de butylcaoutchouc, lesdits élastomères étant présents en tant qu'élastomère total.

7. Gomme à mâcher selon l'une quelconque des revendications précédentes, dans laquelle le plastifiant pour élastomère dans la base de gomme est choisi dans l'ensemble constitué par les esters de glycérol et de colophane, esters de glycérol et de colophane partiellement hydrogénée, esters de glycérol et de colophane polymérisée, esters de glycérol et de colophane partiellement dimérisée, esters méthyliques partiellement hydrogénés de colophane, esters de glycérol et de colophane de tallol, esters de pentaérythritol et de colophane, esters méthyliques de colophane, esters de pentaérythritol et de colophane partiellement hydrogénée, résine terpénique synthétique, résine terpénique naturelle et des combinaisons de ceux-ci.

8. Gomme à mâcher selon l'une quelconque des revendications 1 à 6, dans laquelle le plastifiant pour élastomère est choisi dans l'ensemble constitué par un ester de glycérol et de résine de térébenthine, un ester de glycérol et de résine de térébenthine partiellement hydrogénée, des résines terpéniques et des combinaisons de ceux-ci.

9. Gomme à mâcher selon l'une quelconque des revendications 1 à 6, dans laquelle le plastifiant pour élastomère est choisi dans l'ensemble constitué des esters de glycérol et de colophane partiellement hydrogénée, esters méthyliques de colophane, esters de glycérol et de colophane, résine terpénique et des combinaisons de ceux-ci.

10. Gomme à mâcher selon l'une quelconque des revendications 1 à 9, dans laquelle la charge dans la base de gomme est choisie dans l'ensemble constitué par les carbonate de calcium, carbonate de magnésium, talc, calcaire broyé, silicate de magnésium, silicate d'aluminium, argile, alumine, dioxyde de titane, phosphates monocalciques, phosphates dicalciques, phosphates tricalciques, cellulose et des combinaisons de ceux-ci.

11. Gomme à mâcher selon l'une quelconque des revendications 1 à 9, dans laquelle la charge est choisie dans l'ensemble constitué par le carbonate de calcium, le talc et des combinaisons de ceux-ci.

12. Gomme à mâcher selon l'une quelconque des revendications précédentes, dans laquelle l'émollient dans la base de gomme est choisi dans l'ensemble constitué par les suif, suif hydrogéné, huiles végétales hydrogénées, huiles végétales partiellement hydrogénées, beurre de cacao, monostéarate de glycérol, monoglycérides, diglycérides, triglycérides, monoglycérides acétylés, triacétate de glycérol, lécithine, acides gras, diacétate de glycérol, lanoline et des combinaisons de ceux-ci.

13. Gomme à mâcher selon l'une quelconque des revendications 1 à 11, dans laquelle les graisses, les huiles ou les émollients sont choisis dans l'ensemble constitué par les huiles végétales hydrogénées et partiellement hydrogénées, monostéarate de glycérol, triacétate de glycérol, lécithine, monoglycéride acétylé et des combinaisons de ceux-ci.

14. Gomme à mâcher selon l'une quelconque des revendications 1 à 13, ayant des propriétés de pégosité réduite, comprenant, en outre, une partie de charge formée de solides sensiblement séchés, ladite partie de charge contenant de 0,10 à 2 % en poids d'eau.

15. Gomme à mâcher selon l'une quelconque des revendications précédentes, dans laquelle l'édulcorant est au moins un édulcorant à faible teneur en humidité, qui apporte seulement de 0,10 % en poids à 2 % en poids d'eau à la gomme à mâcher sans cire et à faible teneur en humidité.

16. Gomme à mâcher selon la revendication 15, dans laquelle l'édulcorant à faible teneur en humidité est choisi parmi des alcools de sucre, des édulcorants d'intensité élevée et des mélanges de ceux-ci.

17. Gomme à mâcher selon la revendication 15, dans laquelle l'édulcorant à faible teneur en humidité et soluble dans l'eau est choisi parmi au moins un édulcorant provenant du groupe constitué par les sucres, alcools de sucre, sirops de glucides modifiés, édulcorants d'intensité élevée et des mélanges de ceux-ci.

18. Gomme à mâcher selon l'une quelconque des revendications 1 à 14, dans laquelle au moins un édulcorant comprend un hydrolysat hydrogéné d'amidon coévaporé avec du glycérol, comprenant de 20 à 30 % en poids de glycérol, de 5 à 10 % en poids d'eau et de 60 à 75 % en poids de solides d'hydrolysat hydrogéné d'amidon.

19. Gomme à mâcher selon la revendication 18, dans laquelle l'hydrolysat hydrogéné d'amidon coévaporé avec du glycérol constitue de 1 à 50 % en poids du poids total de la gomme à mâcher.

20. Gomme à mâcher selon l'une quelconque des revendications 1 à 19, comprenant de 20 à 60 % en poids d'au moins un élastomère synthétique.

21. Gomme à mâcher selon l'une quelconque des revendications 1 à 20, comprenant de 20 à 50 % en poids d'une base de gomme comprenant :
de 25 à 45 % en poids d'au moins un élastomère synthétique ;
de 10 à 40 % en poids d'au moins un plastifiant pour élastomère ;
de 5 à 30 % en poids de charge ; et
de 15 à 35 % en poids d'au moins une graisse, une huile ou un émollient.

22. Gomme à mâcher selon l'une quelconque des revendications 1 à 20, comprenant de 20 à 50 % en poids d'une base de gomme comprenant :
de 12 à 30 % en poids d'au moins un élastomère naturel ;
de 20 à 40 % en poids d'au moins un élastomère synthétique ;
de 5 à 25 % en poids d'au moins un plastifiant pour élastomère ;
de 4 à 25 % en poids de charge ; et
de 15 à 30 % en poids d'au moins une graisse, une huile ou un émollient.

23. Gomme à mâcher selon l'une quelconque des revendications 1 à 20, comprenant une base de gomme comprenant :
de 30 à 60 % en poids d'au moins un élastomère synthétique;
de 5 à 55 % en poids d'au moins un plastifiant pour élastomère ;
de 10 à 35 % en poids de charge ; et
de 5 à 25 % en poids d'au moins une graisse, une huile ou un émollient.

24. Gomme à mâcher selon l'une quelconque des revendications 1 à 20, dans laquelle une base de gomme sans cire comprend, par rapport au poids de la base de gomme :
de 10 à 60 % en poids d'élastomère synthétique ;
de 0 à 30 % en poids d'élastomère naturel ;
de 5 à 55 % en poids de plastifiant pour élastomère ;
de 4 à 40 % en poids de charge ;
de 5 à 40 % en poids de graisse, huile, émollient, émulsifiant ; et
de 0 à 1 % en poids d'agent hygroscopique.

25. Gomme à mâcher selon l'une quelconque des revendications 1 à 24, comprenant, par rapport au poids de la gomme :
de 10 à 90 % en poids d'au moins une base de gomme sans cire ;
de 0,01 à 10,0 % en poids d'au moins un agent aromatisant ; et
de 0,001 à 70 % en poids d'au moins un édulcorant sensiblement séché et soluble dans l'eau, qui apporte de 0,1 % en poids à 2 % en poids d'eau à la gomme à mâcher.

26. Gomme à mâcher selon l'une quelconque des revendications 1 à 25, ladite gomme à mâcher étant sous la forme d'une gomme à faire des bulles, comprenant :
une partie de charge sensiblement séchée et soluble dans l'eau ; et
un ou plusieurs agents aromatisants.

27. Gomme à mâcher selon l'une quelconque des revendications 1 à 26, ladite gomme ayant une pégosité réduite sur la surface des dents.

28. Gomme à mâcher selon l'une quelconque des revendications 1 à 27, ladite gomme étant sans sucre.

29. Gomme à mâcher selon l'une quelconque des revendications 1 à 28, ladite gomme étant sous la forme d'un granule ou d'une boule enrobé(e).
